# EUROPÄISCHE PATENTANMELDUNG

(11) **EP 1 247 997 A2**
(43) Veröffentlichungstag der Anmeldung: **09.10.2002**
(21) Anmeldenummer: 02400026.7
(22) Anmeldetag: 03.04.2002
(51) Int. Cl.: F15B 15/24, F15B 15/14

(54) **Führungseinrichtung und Anfahranbausatz**

(30) Priorität: 04.04.2001 DE 10116634
(71) Anmelder: Schunk GmbH & Co KG Fabrik für Spann- und Greifwerkzeuge, 74348 Lauffen (DE)
(72) Erfinder: Franz, Michael, 74360 Ilsfeld (DE)
(74) Vertreter: Bulling, Alexander, Dr.

(57) **Zusammenfassung**

Die Erfindung betrifft eine Führungseinrichtung (1) mit einem Zylinderkörper (3) und wenigstens einer darin angeordneten Zylinderkammer (5) mit einem in der Zylinderkammer (5) verschiebbar gelagerten, beidseitig beaufschlagbaren Kolben (7) mit einer Kolbenstange (9), mit einem mit dem freien Ende der Kolbenstange (9) gekoppelten, gegenüber dem Zylinderkörper (3) parallel zur
Axialrichtung der Zylinderkammer (5) verfahrbaren Schlittenplatte (11) und mit an dem Zylinderkörper (3) und an der Schlittenplatte (11) angeordneten Hubbegrenzungsmitteln (21,23,25,31,32,37,39,43,45).

Die Erfindung kennzeichnet sich dadurch, dass die Hubbegrenzungsmittel eine parallel zur Verfahrrichtung der Schlittenplatte (11), zwischen zwei Anschlägen (33,36) axial verschiebbar gelagerte Anschlageinheit (31) umfassen.

## Beschreibung

Die Erfindung betrifft eine Führungseinrichtung mit einem Zylinderkörper und wenigstens einer darin angeordneten Zylinderkammer, mit einem in der Zylinderkammer verschiebbar gelagerten, beidseitig beaufschlagbaren Kolben mit einer Kolbenstange, mit einer mit dem freien Ende der Kolbenstange gekoppelten, gegenüber dem Zylinderkörper parallel zur Axialrichtung der Zylinderkammer verfahrbaren Schlittenplatte, und mit an dem Zylinderkörper und an der Schlittenplatte angeordneten Hubbegrenzungsmitteln. Die Erfindung betrifft außerdem einen Anfahranbausatz.

Eine derartige Führungseinrichtung ist beispielsweise aus der EP 0 683 010 B1 bekannt geworden. Die dort beschriebene Führungseinrichtung weist zur positionsgenauen Einstellung der Hubbewegung in Ausfahr- als auch in Rückfahrrichtung des Kolbens bzw. der Schlittenplatte an den Gleittisch angeordnete Anschlagbolzen auf. Die Anschlagbolzen sind in ihrer Axialrichtung verstellbar und festsetzbar und schlagen gegen ein zylinderkörperseitiges Hubbegrenzungsmittel in Form eines Stopperblocks. Nachteil einer derartigen Führungseinrichtung ist, dass bei der Hubbewegung der Schlittenplatte die Anschlagbolzen mitbewegt werden. Aufgrund der mit zu beschleunigenden und abzubremsenden Masse der Anschlagbolzen muss eine höhere Antriebsleistung erbracht bzw. müssen größere Kräfte aufgenommen werden, was zwangsläufig zu einer größeren Dimensionierung der einzelnen Bauteile führt.

Bei anderen bekannten Führungseinrichtungen sind die verstellbaren und festsetzbaren Hubbegrenzungsmittel nicht an der Schlittenplatte, sondern an dem Zylinderkörper angeordnet. Dies hat den Vorteil, dass weniger Masse zu bewegen ist. Eine derartige Anordnung der zylinderkörperseitigen Hubbegrenzungsmittel hat allerdings den Nachteil, dass für die Hubbegrenzungsmittel entsprechender Bauraum bereitzustellen ist, wodurch entweder der Hub der Schlittenplatte verkürzt wird oder die zylinderkörperseitigen Hubbegrenzungsmittel über die Außenkonturen des Zylinderkörpers hinausragen.

Der vorliegenden Erfindung liegt deshalb die Aufgabe zugrunde, eine eingangs genannte Führungseinrichtung bereitzustellen, bei der den geschilderten Nachteilen des Standes der Technik abgeholfen ist. Insbesondere soll der Hub des Schlittenplatte durch die Hubbegrenzungsmittel so wenig wie möglich eingeschränkt werden, wobei die Hubbegrenzungsmittel insbesondere nicht in Wirkrichtung der Führungseinrichtung über die Außenkonturen des Zylinderkörpers hinausragen sollen. Die Führungseinrichtung soll erfindungsgemäß kompakt und klein bauen.

Diese Aufgabe wird bei einer Führungseinrichtung der eingangs beschriebenen Art erfindungsgemäß dadurch gelöst, dass die Hubbegrenzungsmittel eine parallel zur Verfahrrichtung der Schlittenplatte, zwischen zwei Anschlägen axial verschiebbar gelagerte Anschlageinheit umfassen. Dies hat den Vorteil, dass aufgrund der Verschiebbarkeit der Anschlageinheit die Hubbewegung der Schlittenplatte durch die Anordnung der Anschlageinheit nicht oder nur bedingt begrenzt wird. Vorzugsweise kann eine Führungseinrichtung bereitgestellt werden, die einen maximalen Hub aufweist, ohne dass die Hubbegrenzungsmittel über die Außenkontur des Zylinderkörpers störend überstehen.

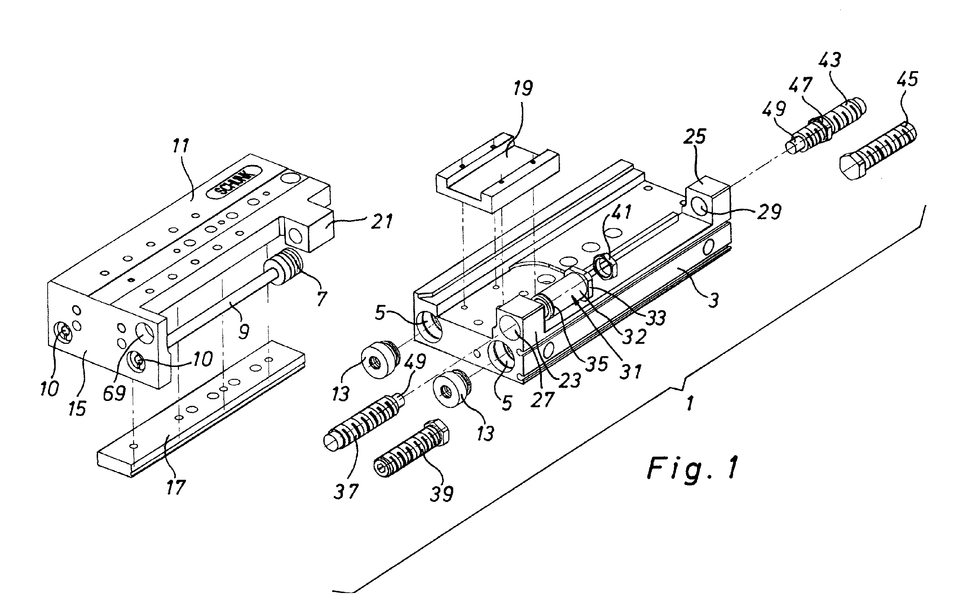

Bei einer bevorzugten Ausführungsform der Erfindung (Figuren 1 - 9) ist vorgesehen, dass die Hubbegrenzungsmittel zylinderkörperseitig zwei Anschlagblöcke und schlittenplattenseitig einen zwischen den Anschlagblöcken angeordneten Stopperblock umfassen, wobei an dem der dem freien Ende der Kolbenstange zugewandten Anschlagblock die Anschlageinheit axial verschiebbar angeordnet ist. Durch diese Anordnung der Anschlageinheit kann erreicht werden, dass die Anschlageinheit und der zugehörige Anschlagblock nicht störend in Wirkrichtung der Schlittenplatte über den Zylinderkörper hinausragt.

Hierbei kann bevorzugterweise vorgesehen sein, dass die Schlittenplatte auf der dem freien Ende der Kolbenstange zugewandten Seite einen Mitnehmer aufweist, der beim Rückfahren der Schlittenplatte die Anschlageinheit in Rückfahrrichtung axial verschiebt bzw. mitnimmt. Dabei wird vorteilhafterweise der Mitnehmer von einer an der Schlittenplatte in Wirkrichtung angeordneten Endplatte gebildet. Zur Hubbegrenzung der Schlittenplatte in Ausfahrrichtung schlägt der Stopperblock gegen die Anschlageinheit, die ihrerseits gegen den Anschlagblock schlägt. Zur Hubbegrenzung in Rückfahrrichtung schlägt beispielsweise der Stopperblock gegen den dem freien Ende der Kolbenstange abgewandten Anschlagblock.

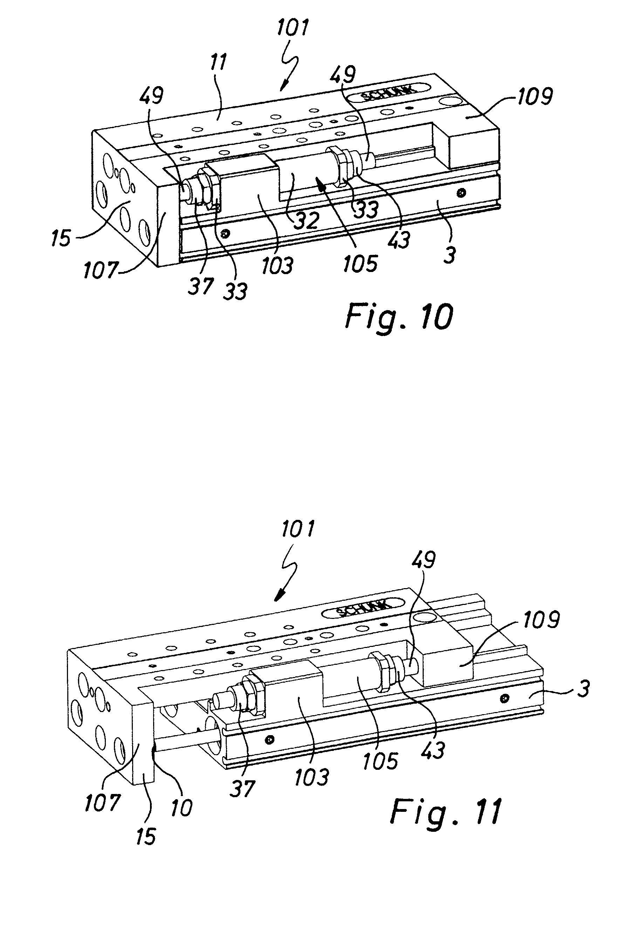

Eine weitere Ausführungsform der Erfindung (Figur 10 - 13) zeichnet sich dadurch aus, dass die Hubbegrenzungsmittel schlittenplattenseitig zwei Stopperblöcke und zylinderkörperseitig einen zwischen den beiden Stopperblöcken angeordneten Anschlagblock umfassen, wobei an dem Anschlagblock die Anschlageinheit axial verschiebbar angeordnet ist. Dies hat den Vorteil, dass trotz Anordnung des Anschlagblocks mit der axial verschiebbarer Anschlageinheit zwischen den beiden Stopperblöcken der maximale Hub der Schlittenplatte nicht eingeschränkt wird. Die Hubbegrenzungsmittel und insbesondere die Anschlageinheit stehen hierbei auch nicht störend über die Außenkontur des Zylinderkörpers bzw. der Schlittenplatte über.

Vorzugsweise ist hierbei vorgesehen, dass die Hubbegrenzung der Schlittenplatte in Ausfahrrichtung durch Anschlagen des dem freien Ende der Kolbenstange abgewandten Stopperblocks auf das eine freie Ende der Anschlageinheit und in Rückfahrrichtung durch Anschlagen des anderen Stopperblocks auf das andere freie Ende der Anschlageinheit bewirkt wird. Vorteilhafterweise schließen ferner die einander abgewandten Seiten der Stopperblöcke bündig mit den einander gegenüberliegenden Stirnseiten des Zylinderkörpers ab. Dadurch kann ein großer Hub der Schlittenplatte bei Beanspruchung von sehr geringem Bauraum realisiert werden.

Weiterhin ist erfindungsgemäß vorgesehen, dass der dem freien Ende der Kolbenstange zugewandte Stopperblock von einer an der Schlittenplatte abgeordneten Endplatte gebildet wird. Die Endplatte erstreckt sich hierbei vorzugsweise über die gesamte Stirnseite und auch über die entsprechende Stirnseite des Zylinderkörpers.

Eine weitere, ebenfalls bevorzugte Ausführungsform der Erfindung (Figur 14) sieht vor, dass die Hubbegrenzungsmittel zylinderkörperseitig zwei Stopperblöcke und schlittenplattenseitig einen zwischen den Stopperblöcken angeordneten Anschlagblock umfassen, wobei an dem Anschlagblock die Anschlageinheit axial veschiebbar angeordnet ist. Auch diese Ausführungsform der Erfindung hat den Vorteil, dass der Hub der Schlittenplatte nicht durch die Anordnung der Hubbegrenzungsmittel störend beeinflusst wird.

Vorteilhafterweise kann hierbei vorgesehen sein, dass die beiden Stopperblöcke bündig mit den einander gegenüberliegenden Stirnseiten der Schlittenplatte abschließen. Hierdurch wird ein maximaler Hub erreicht, ohne dass die Hubbegrenzungsmittel über die Außenkontur des Zylinderkörpers ragen.

Die Anschlageinheit ist vorzugsweise in einem axialen Durchgangsloch des entsprechenden Anschlagblocks axial verschiebbar angeordnet.

Bei einer weiteren, besonders bevorzugten Ausführungsform der Erfindung ist vorgesehen, dass die Anschlageinheit eine Anschlaghülse mit zwei an den einander abgewandten Enden der Anschlaghülse angeordneten Anschlägen umfasst, die zum Anschlagen gegen die einander gegenüberliegenden, das Durchgangsloch aufweisenden Seiten des entsprechenden Anschlagblocks geeignet sind. Die Anschlaghülse weist vorzugsweise einen kreisrunden Querschnitt auf. Allerdings ist erfindungsgemäß ebenfalls denkbar, dass die Hülse einen ovalen oder auch eckigen Querschnitt aufweist.

Um ein gedämpftes Abbremsen der Schlittenplatte zu gewährleisten, kann erfindungsgemäß vorgesehen sein, dass die Anschlageinheit wenigstens einen in axiale Richtung, gegen einen Stopperblock wirkenden Stoßdämpfer aufweist.

Um ein positionsgenaues Anfahren der Schlittenplatte in eine definierte Position zu gewährleisten, kann erfindungsgemäß die axiale Position von an der Anschlageinheit angeordneten Anschlagmitteln, beispielsweise Stoßdämpfern oder Festanschläge, über Einstellmittel verstellt und festgesetzt werden. Derartige Einstellmittel sind insbesondere Kontermuttern, die die Anschlagmittel an der Einstelleinheit in vorgegebener Position festsetzen.

Um ein unerwünschtes Verschieben der Anschlageinheit während der Hubbewegung der Schlittenplatte zu unterbinden, kann bei einer weiteren erfindungsgemäßen Ausführungsform vorgesehen sein, dass die Anschlageinheit unter Vorspannung gegen einen der Anschläge beaufschlagt ist. Eine derartige Vorspannung kann beispielsweise über ein Federelement, beispielsweise eine Spiralfeder, die die Anschlageinheit in axialer Richtung umgibt, aufgebracht werden.

Eine weitere Ausführungsform der Erfindung sieht einen Anfahranbausatz vor, der einen Grundkörper, wenigstens eine in dem Grundkörper vorhandene Kolbenkammer, einen in der Kolbenkammer parallel zu der Kolbenkammer des Zylinderkörpers verschiebbaren, beidseitig mit Druck beaufschlagbaren Kolben mit einer Kolbenstange und eine an dem freien Ende der Kolbenstange angeordnete Anschlagplatte aufweist. Bei ausgefahrener Anschlagplatte kann die Schlittenplatte an eine definierte Position gegen die Anschlagplatte rückgefahren werden. Vorteilhafterweise werden hierbei die Zylinderkammern der Führungseinrichtung als auch die des Grundkörpers mit dem gleichen Druck beaufschlagt. Weiterhin ist vorgesehen, dass die lichte Querschnittsfläche der Zylinderkammer bzw. der Zylinderkammern des Grundkörpers des Anbausatzes größer ist als die lichte Querschnittsfläche der Zylinderkammer bzw. der Zylinderkammern des Zylinderkörpers der Führungseinrichtung. Dies hat den Vorteil, dass ein sehr schwingungsarmes und damit stabiles Anschlagen der Schlittenplatte beim Rückfahren gegen die Anschlagplatte des Anfahranbausatzes gewährleistet wird.

Ein besonders schwingungsgedämpftes und damit vorteilhaftes Anschlagen hat sich gezeigt, wenn das Verhältnis der lichten Querschnittsfläche der Zylinderkammer bzw. der Zylinderkammern des Grundkörpers zu der lichten Querschnittsfläche der Zylinderkammer bzw. der Zylinderkammern des Zylinderkörpers der Führungseinrichtung im Bereich von 1,4 : 1 bis 2,4 : 1 und vorzugsweise im Bereich von 1,8 : 1 bis 2 : 1 liegt.

Die eingangs genannte Aufgabe wird außerdem durch einen Anfahranbausatz gelöst, der im Vorhergehenden beschrieben ist.

Weitere vorteilhafte Ausgestaltungen und Einzelheiten der Erfindung sind den Unteransprüchen und der folgenden Beschreibung zu entnehmen, in der die Erfindung anhand der in der Zeichnung dargestellten Ausführungsbeispiele näher beschrieben und erläutert ist.

Es zeigen:
- Figur 1: eine erste Ausführungsform einer erfindungsgemäßen Führungseinrichtung in Explosionsdarstellung;
- Figur 2: die Führungseinrichtung gemäß Figur 1 mit einem Anfahranbausatz;
- Figur 3: die Vorderansicht des Anfahranbausatzes gemäß Figur 2;
- Figur 4: einen Schnitt entlang der Linie IV in Figur 3;
- Figur 5 - 8: die Führungseinrichtung gemäß Figur 1 in verschiedenen Hubstellungen;
- Figur 9: die Seitenansicht gemäß der Hubstellung von Figur 6;
- Figur 10 - 13: eine zweite Ausführungsform einer erfindungsgemäßen Führungseinrichtung in verschiedenen Hubstellungen; und
- Figur 14: eine dritte Ausführungsform einer erfindungsgemäßen Führungseinrichtung.

In Figur 1 ist eine erste Ausführungsform einer erfindungsgemäßen Führungseinrichtung 1 dargestellt. Die Führungseinrichtung 1 umfasst einen Zylinderkörper 3 mit zwei in axialer Richtung, parallel zueinander angeordneten Zylinderkammern 5. In jeder der beiden Zylinderkammern 5 ist in montiertem Zustand jeweils ein beidseitig mit Fluid, insbesondere mit Druckluft, beaufschlagbarer Kolben 7 mit jeweils einer Kolbenstange 9 angeordnet. Die beiden Kolbenstangen 9 erstrecken sich in montiertem Zustand der Führungseinrichtung 1 durch jeweils eine Kolbenraumabdeckung 13. Die freien Enden 10 der Kolbenstange 9 sind mit einer an einer Schlittenplatte 11 angeordneten, vorzugsweise angeformten, Endplatte 15 befestigt. Bei der Darstellung gemäß Figur 1 ist lediglich ein Kolben 7 mit zugehöriger Kolbenstange 9 zu sehen, da der zweite Kolben 7 mit seiner Kolbenstange 9 von der Schlittenplatte 11 abgedeckt ist. Erfindungsgemäß ist ebenfalls denkbar, dass lediglich eine Zylinderkammer 5 mit einer Kolbenstange 9 vorgesehen ist.

An der Unterseite der Schlittenplatte 11 ist in montiertem Zustand eine Führungsschiene 17 angeordnet. Die Führungsschiene 17 wirkt hierbei mit einem an den Zylinderkörper 3 angeordneten Führungswagen 19 derart zusammen, dass die Führungsplatte 11 über die Hubbewegung der gemeinsam zu beaufschlagenden Kolben 7 parallel zur Axialrichtung der beiden Zylinderkammern 5 verfahrbar ist. Zwischen der Führungsschiene 17 und dem Führungswagen 19 sind vorteilhafterweise entsprechende Lagermittel, beispielsweise Lagerkugeln o.ä., vorgesehen. Anstelle der Anordnung der Führungsschiene 17 an der Schlittenplatte 11 kann ebenfalls vorgesehen sein, dass die Führungsschiene 17 an dem Zylinderkörper 3 und der Führungswagen 19 an der Schlittenplatte 11 angeordnet ist.

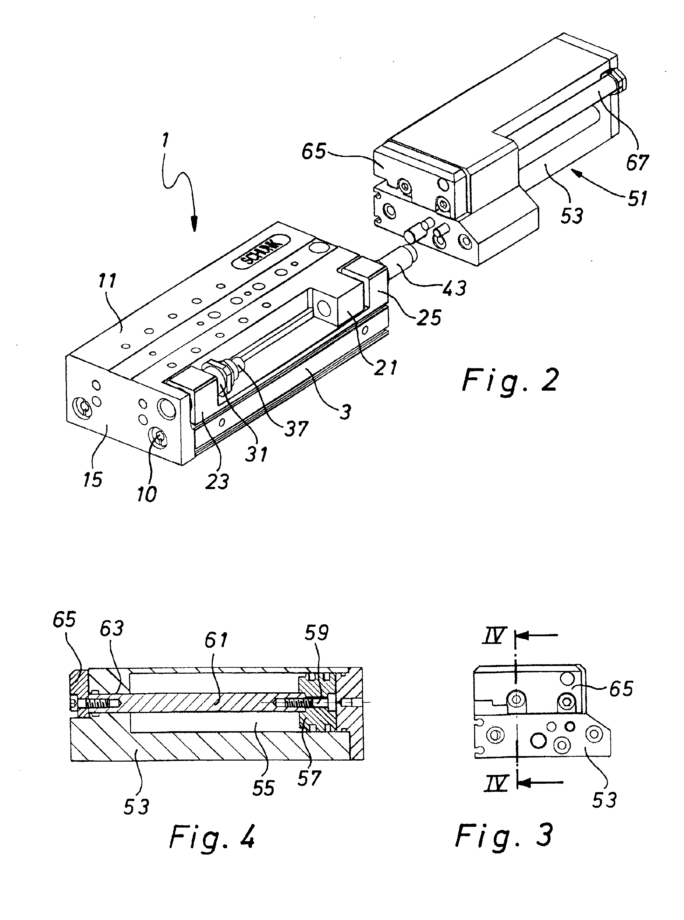

Die Führungseinrichtung 1 sieht ferner Hubbegrenzungsmittel zur Begrenzung des Kolbenhubes bzw. der Verfahrbewegung der Schlittenplatte 11 vor. Bei der in Figur 1 gezeigten Ausführungsform der Erfindung umfassen die Hubbegrenzungsmittel einen an der Schlittenplatte 11 angeordneten Stopperblock 21 und an dem Zylinderkörper 3 zwei angeordnete Anschlagblöcke 23 und 25, die ihrerseits weitere Anschlagmittel vorsehen. Der Stopperblock 21 ist in montiertem Zustand, wie in Figur 2 gezeigt, zwischen den zylinderkörperseitigen Anschlagblöcken 23 und 25 angeordnet.

Die beiden Anschlagblöcke 23 und 25 weisen jeweils eine parallel zur Verfahrrichtung der Schlittenplatten 11 angeordnete Durchgangsbohrung 27 und 29 auf.

Die Durchgangsbohrung 27 des Anschlagblocks 23 ist zur Aufnahme einer Anschlageinheit 31 vorgesehen. Die Anschlageinheit 31 umfasst eine Anschlaghülse 32, die an ihrer dem Anschlagblock 25 zugewandten Stirnseite einen Anschlagkopf 33 aufweist. An dem dem Anschlagkopf 33 abgewandten Ende der Anschlaghülse 32 ist eine Ringnut 35 vorhanden. In montiertem Zustand durchgreift die Anschlaghülse 32 die Bohrung 27 axial verschiebbar. Zur Sicherung der Anschlaghülse wird in die Ringnut 35 ein in dieser Figur nicht dargestellter Sicherungsring 36 eingesetzt. In die dem Anschlagblock 25 abgewandte Richtung ist die Verschiebbarkeit der Anschlageinheit 31 aufgrund des Anschlagens des Anschlagskopfes 33 gegen die dem Anschlagblock 25 zugewandte Stirnseite des Anschlagblocks 23 begrenzt. In die andere Richtung wird die Verschiebbarkeit der Anschlageinheit 31 durch Anschlagen des Sicherungsringes 36 gegen die dem Anschlagblock 25 abgewandte Stirnseite des Anschlagblocks 23 begrenzt.

Die Hubbegrenzungsmittel der Führungseinrichtung 1 gemäß Figur 1 umfassen ferner einen Stoßdämpfer 37 oder einen Festanschlag 39, die in die Anschlaghülse 32 einführbar und festsetzbar sind. Vorzugsweise sieht die Anschlaghülse 32 ein Innengewinde vor. In dieses Innengewinde ist ein an dem Stoßdämpfer 37 bzw. dem Festanschlag 39 vorhandenes Außengewinde einschraubbar. Über eine Kontermutter 41 kann dann der Stoßdämpfer 37 bzw. der Festanschlag 39 an der Anschlaghülse 32 in vorgesehener Position festgesetzt werden. Die Anschlageinheit 31 umfasst demnach die Anschlaghülse 32 mit Anschlagkopf 33 und Sicherungsring 36 sowie den mit der Kontermutter 41 festgesetzten Stoßdämpfer 7 oder Festanschlag 39.

Die Durchgangsbohrung 29 des Anschlagblocks 25 weist vorzugsweise im Gegensatz zu der Druhgangsbohrung 27 ein Innengewinde auf. Als Anschlagmittel wird in dieses Innengewinde entweder ein Stoßdämpfer 43, der entsprechend Stoßdämpfer 37 ausgebildet ist, oder ein dem Festanschlag 39 entsprechender Festanschlag 45 eingeschraubt. Zur Festsetzung wird der Stoßdämpfer 43 bzw. der Festanschlag 45 mit einer Kontermutter 47 mit dem Anschlagblock 25 verspannt.

Die Stoßdämpfer 37 und 43 weisen je eine das Außengewinde beinhaltende Gewindehülse auf, in der ein Stoßkopf 49 axial federnd gelagert ist. Die Stoßdämpferwirkung des Stoßkopfs 49 kann hierbei federelastisch, pneumatisch oder auch hydraulisch erreicht werden.

Die Stoßdämpfer 37 und 43 bzw. die Festanschläge 39 und 45 bilden Anschlagmittel, gegen die die dem jeweiligen Stoßdämpfer 37 bzw. 43 und dem jeweiligen Festanschlag 39 bzw. 45 zugewandte Stirnseite des Anschlagblocks 21 zur Begrenzung der Verfahrbewegung der Schlittenplatte 11 anschlagen.

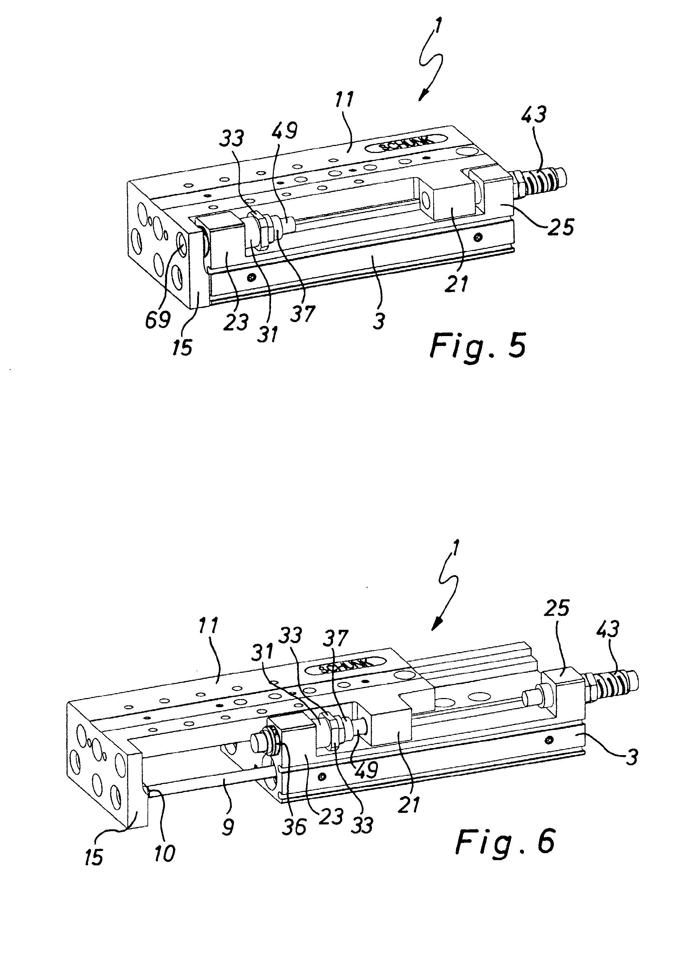

Das Zusammenwirken der zylinderkörperseitigen Hubbegrenzungsmittel 23, 31, 37 bzw. 39 und 25, 43 bzw. 45 mit dem schlittenplattenseitigen Stopperblock 21 wird in der Beschreibung zu den Figuren 5 - 9 ausführlich erläutert.

In Figur 2 ist die Führungseinrichtung 1 in montiertem Zustand dargestellt. In Verlängerung der der Endplatte 15 abgewandten Stirnseite der Führungseinrichtung 1 ist ein Anfahranbausatz 51 angeordnet. Der Anfahranbausatz 51 umfasst einen Grundkörper 53, in dem eine, in Figur 4 dargestellte, Kolbenkammer 55 vorhanden ist. In der Kolbenkammer 55 ist ein beidseitig mit Druck beaufschlagbarer Kolben 57 gelagert. An dem Kolben 57 ist mittels einer Kolbenschraube 59 eine Kolbenstange 61 angeordnet, die eine Öffnung 63 des Grundkörpers 53 durchgreift. An dem dem Kolben 57 abgewandten Ende der Kolbenstange 61 ist eine Anfahrplatte 65 angeordnet. Über das Beaufschlagen des Kolbens 57 kann die Anfahrplatte 65 verfahren werden.

Der Anfahranbausatz 51 ist dazu vorgesehen, an die ihm in Figur 2 zugewandten Seite der Führungseinrichtung 1 befestigt zu werden. Zur Verbindung mit der Führungseinrichtung 1 sind an der in der Figur 2 zu sehenden Stirnseite des Grundkörpers 53 verschiedene Verbindungs- und Kommunikationsmittel vorgesehen. Die Höhe des Grundkörpers 53 des Anfahranbausatzes 51 entspricht im Wesentlichen der Höhe des Zylinderkörpers 3. Dadurch kann bei ausgefahrener Schlittenplatte 11 die Anfahrplatte 65 über den Kolben 57 oberhalb des Zylinderkörpers 3 hinter die Schlittenplatte 11 verfahren werden. Über eine Einstellstange 67, die mit der Anfahrplatte 65 gekoppelt ist, kann ein definierter Hub der Anfahrplatte 65 festgelegt werden. Bei ausgefahrener Anfahrplatte 65 wird die Rückfahrbewegung der Schlittenplatte 11 vor Anschlagen des Stopperblocks 21 an den an dem Anschlagblock 25 vorhandenen Stoßdämpfer 43 beendet; nämlich durch Anschlagen der der Anfahrplatte 65 zugewandten Stirnseite der Schlittenplatte 11 gegen die Anfahrplatte 65. Damit kann die Schlittenplatte 11 beim Rückfahren an eine definierte Position angefahren werden.

Vorteilhafterweise ist die bei ausgefahrener Anfahrplatte 65 mit Druck beaufschlagte Kolbenfläche des Kolbens 59 größer als die bei der Rückfahrbewegung der Schlittenplatte 11 mit Druck beaufschlagte Kolbenfläche der beiden Kolben 7. Dadurch wird ein schwingungsarmes Anschlagen der Schlittenplatte 11 beim Rückfahren gegen die Anschlagplatte 65 des Anfahranbausatzes 51 erreicht.

Das Verhältnis der lichten Querschnittsfläche der Zylinderkammern 55 des Anfahranbausatzes 51 zu der entsprechenden Fläche der beiden Zylinderkammern 5 der Führungseinrichtung weist vorzugsweise einen Wert zwischen 1,4 und 2,4 auf. Als besonders vorteilhaft hat sich ein Verhältnis zwischen 1,8 und 2 erwiesen.

Die einander abgewandten Seiten der Anschlagblöcke 23 und 25 sind zu der jeweiligen Stirnseite des Zylinderkörpers 3 bündig angeordnet. Der Stopperblock 21 ist von der Endplatte 15 abgewandten Stirnseite der Schlittenplatte 11 so weit zurückversetzt, dass diese Stirnseite der Schlittenplatte 11 bei rückgefahrenem Kolben 7 weitgehend bündig mit der entsprechenden Stirnseite des Zylinderkörpers 3 abschließt, wie in Figur 2 gezeigt ist.

In der Figur 5 ist die Führungseinrichtung 1 in Ausgangsstellung dargestellt. Der Kolben 7 befindet sich hierbei in rückgefahrener Position. Der Stopperblock 21 beaufschlagt mit seiner dem Anschlagblock 25 zugewandten Stirnseite den Stoßkopf 49 des Stoßdämpfers 43. Die Anschlageinheit 31 ist in der in Figur 5 gezeigten Stellung der Führungseinrichtung 1 von der Endplatte 15 axial in Richtung auf das Stopperelement 21 verschoben. Das dem Stoßkopf 49 abgewandte freie Ende des Stoßdämpfers 37 wird hierbei zur Einsparung von Bauraum von einer Zylinderbohrung 69 in der Endplatte 15 aufgenommen.

Die beschriebene Anordnung hat den Vorteil, dass ein vollständiges Rückfahren der Schlittenplatte 11, wie in Figur 5 gezeigt, möglich ist, ohne dass der Stoßdämpfer 37 in Wirkrichtung der Schlittenplatte 11 über die Endplatte 15 hinaussteht. Über die axiale Verschiebbarkeit der Anschlageinheit 31 kann dennoch die Schlittenplatte 11 einen großen, nicht oder nur bedingt durch die Anbringung des Stoßdämpfers 37 begrenzten Hub, zurücklegen.

In Figur 6 ist die Schlittenplatte 11 während des Ausfahrens dargestellt. Gezeigt ist der Moment, in dem der Stopperblock 21 gegen den Stoßkopf 49 des Stoßdämpfers 37 anfährt. Aufgrund der verschiebbar gelagerten Anschlageinheit 31 wird die Anschlageinheit 31 von dem Stopperblock 21 mitgenommen. Die Ausfahrbewegung der Schlittenplatte 11 wird hierdurch nicht behindert.

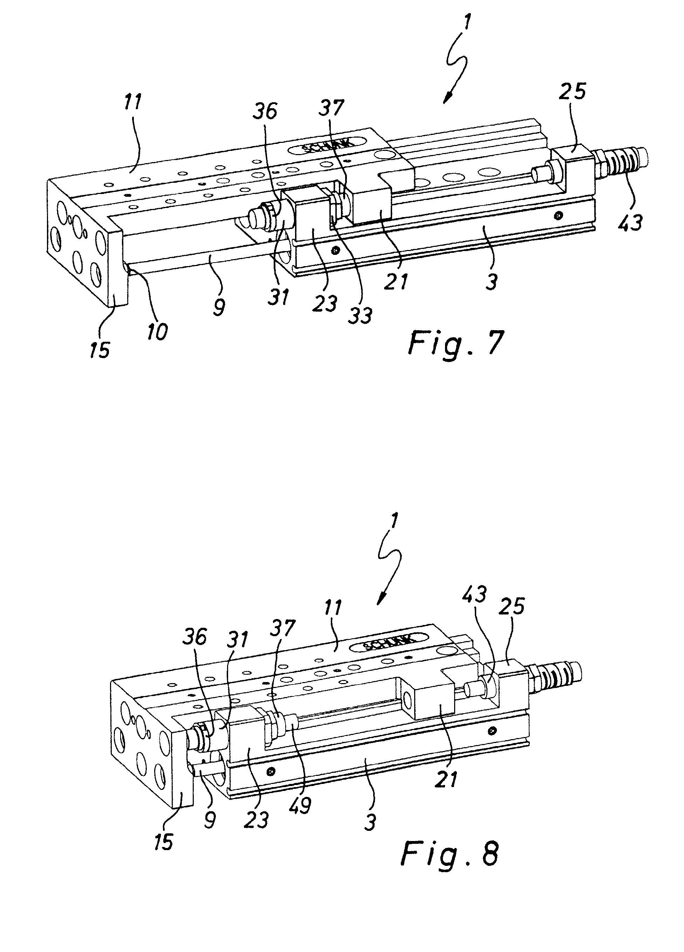

Bei weiterem Ausfahren der Schlittenplatte 11 wird über den Stopperblock 21 die Anschlageinheit 31 axial verschoben, bis schließlich der Anschlagkopf 33, wie in Figur 7 dargestellt ist, gegen den Anschlagblock 23 schlägt.

Umfasst die Anschlageinheit 31 einen Stoßdämpfer 37, so wird die Hubbewegung der Schlittenplatte 11 über das Zusammenwirken des Stopperblocks 21 und des Stoßkopfes 49 des Stoßdämpfers 37 abgedämpft. Erfindungsgemäß ist auch denkbar, anstelle des Stoßdämpfers 37 den in Figur 1 dargestellten Festanschlag 39 vorzusehen.

Beim Rückfahren der Schlittenplatte 11 fährt die dem Anschlagblock 23 zugewandte Seite der Endplatte 15, wie in Figur 8 dargestellt, gegen das dem Stoßkopf 49 abgewandte Ende des Stoßdämpfers 37. Dadurch wird die Anschlageinheit 31 von der rückfahrenden Schlittenplatte 11 in die in Figur 5 gezeigte Position mitgenommen. Die Rückfahrbewegung der Schlittenplatte 11 wird durch das Auflaufen der dem Anschlagblock 25 zugewandten Seite des Stopperblocks 21 auf den Stoßkopf 49 des Stoßdämpfers 43 abgebremst.

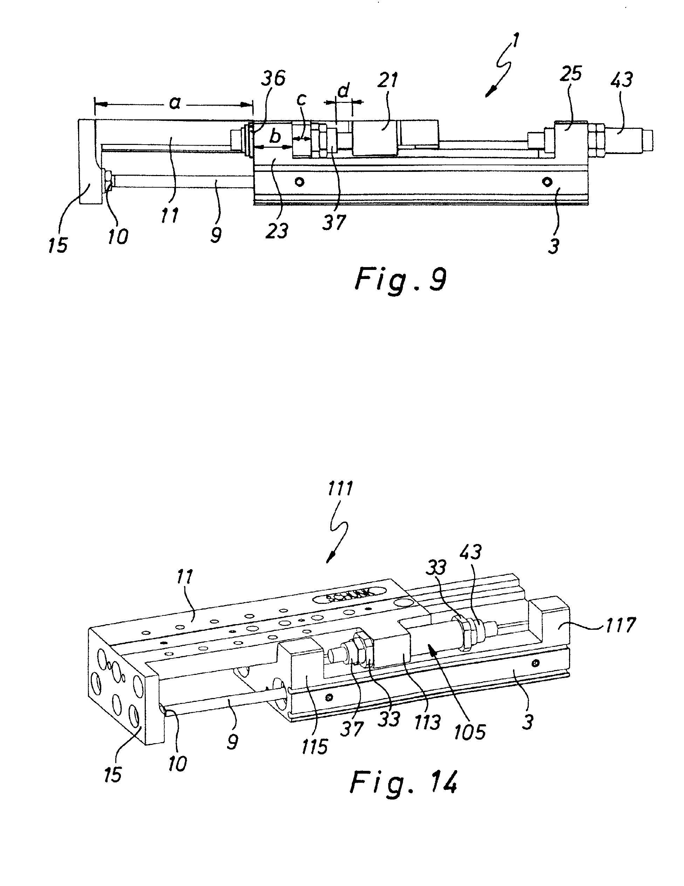

Aus Figur 9, die die Führungseinrichtung in der in Figur 6 gezeigten Position in Seitenansicht zeigt, wird deutlich, dass sich der maximale Hub der Schlittenplatte 11 hₘₐₓ aus den Maßen a, c und d zusammensetzt; also hₘₐₓ = a + c + d. Das Maß a gibt hierbei den Verfahrweg der Schlittenplatte 11 beim Auflaufen des Stopperblocks 21 gegen den Stoßkopf 49 des Stoßdämpfers 37 an. Das Maß c gibt an, um wieviel die Anschlageinheit 31 zwischen den beiden Anschlägen 33 und 36 breiter ist als der Anlaufblock 23, der die Breite b aufweist. Der Federweg des Stoßdämpfers 37 wird von dem Maß d wiedergegeben.

Die erfindungsgemäße Führungseinrichtung 1 hat gegenüber bekannten Führungseinrichtungen den Vorteil, dass der maximale Hubweg hₘₐₓ aufgrund der verschiebbar angeordneten Anschlageinheit 31 um das Maß c größer ist.

In den Figuren 10 - 13 ist eine zweite Ausführungsform der Erfindung dargestellt. Gezeigt ist eine Führungseinrichtung 101, bei der der Führungseinrichtung 1 entsprechende Teile mit entsprechenden Bezugszahlen gekennzeichnet sind. Im Gegensatz zur Führungseinrichtung 1 weist der Zylinderkörper 3 der Führungseinrichtung 101 lediglich einen Anschlagblock 103 auf. In der axial parallel zur Zylinderkammer 5 verlaufenden Zylinderbohrung 27 des Anschlagblocks 103 ist eine Anschlageinheit 105 verschiebbar zwischen zwei Anschlagköpfen 33 angeordnet. Die Anschlageinheit 105 umfasst eine Anschlaghülse 32, in der zwei Stoßdämpfer 37 und 43 angeordnet sind.

Der Anschlagblock 103 mit der Anschlageinheit 105 ist zwischen zwei an der Schlittenplatte 11 angeordneten Stopperblöcken 107 und 109 angeordnet. Der Stopperblock 107 wird hierbei von der Endplatte 15 gebildet.

Bei der in der Figur 10 gezeigten Führungseinrichtung 101 mit rückgefahrener Schlittenplatte 11 wird der Stoßkopf 49 des Stoßdämpfers 37 von dem Stopperblock 107 bzw. der Endplatte 15 beaufschlagt. Der Stoßdämpfer 37 stützt sich hierbei an dem Anschlagkopf 33 ab, der sich wiederum an dem Anschlagblock 103 des Zylinderkörpers 3 abstützt.

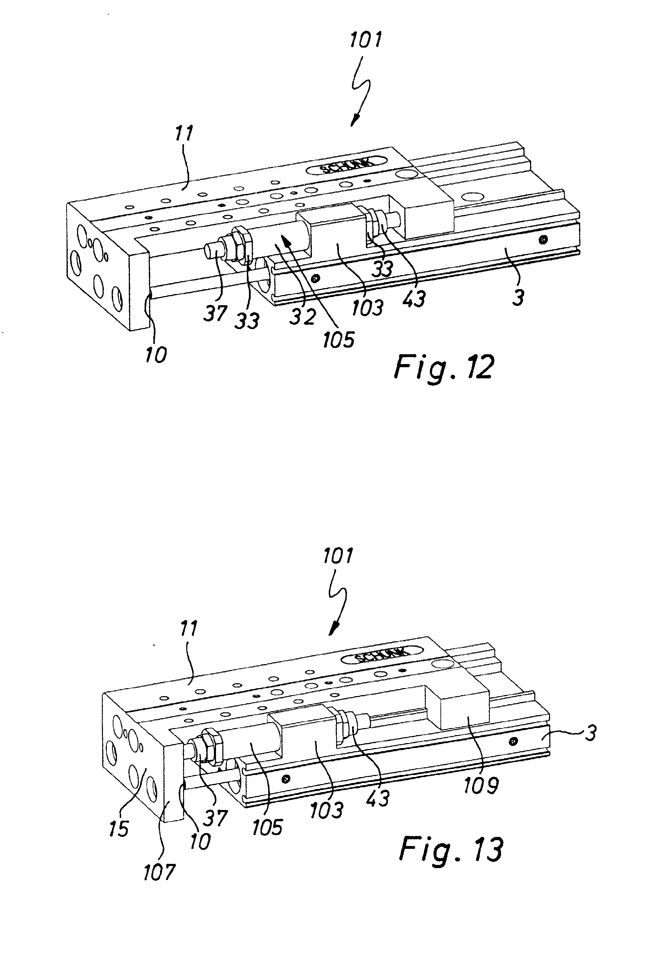

Wird die Schlittenplatte 11 ausgehend von der in Figur 10 dargestellten Position verfahren, so läuft der Stopperblock 109 in der in Figur 11 gezeigten Position auf den Stoßkopf 49 des Stoßdämpfers 43 auf. Aufgrund der axialen Lagerung der Anschlageinheit 105 wird bei weiterem Ausfahren der Schlittenplatte 11 die Anschlageinheit 105 in Hubrichtung verfahren, bis der dem Stopperblock 109 zugewandte Anschlagkopf 33 gegen die dem Stopperblock 109 zugewandte Stirnseite des Anschlagblocks 103 anschlägt. Diese Position ist in Figur 12 gezeigt. Der Hub der Schlittenplatte 11 wird demnach durch Beaufschlagen des Stoßkopfs 49 des Stoßdämpfers 43 abgebremst, wobei der Stoßdämpfer 43 sich an der Anschlaghülse 32 abstützt, die sich ihrerseits wiederum über den Anschlagkopf 33 an der dem Stopperblock 109 zugewandten Stirnseite des Anschlagblocks 103 abstützt.

Beim Rückfahren der Schlittenplatte 11 läuft der Stopperblock 107 bzw. die Endplatte 15, wie in Figur 13 dargestellt, gegen den Stoßdämpfer 37. Aufgrund der axialen Verschiebbarkeit der Anschlageinheit 105 wird diese so weit mit rückgeführt, bis der der Endplatte 15 zugewandte Anschlagkopf 33 gegen die der Endplatte zugewandte Stirnseite des Anschlagblocks 103 anschlägt. Die Rückfahrbewegung der Schlittenplatte 11 wird hierbei über den Stoßkopf 49 des Stoßdämpfers 37 abgedämpft, wobei sich der Stoßdämpfer 37 an der Anschlaghülse 105 und die Anschlaghülse 105 sich an dem Stopperblock 103 abstützt (vergl. Figur 10).

Die Führungseinrichtung 101 hat gegenüber bekannten Führungseinrichtungen den Vorteil, dass der Hub der Schlittenplatte 11 relativ groß ist, obwohl die Hubbegrenzungsmittel nicht über die Außenkontur der Führungseinrichtung 101 ragen. Dies wird, wie im Vorhergehenden beschrieben, dadurch erreicht, dass eine Anschlageinheit 105 vorgesehen wird, die zwischen zwei Anschlägen 33 verschiebbar gelagert ist und die die Ausfahrbewegung als auch die Rückfahrbewegung der Schlittenplatte 11 begrenzt.

Eine dritte Ausführungsform der Erfindung ist in Figur 14 gezeigt. Die Schlittenplatte 11 der Führungseinrichtung 111 weist hierbei einen Anschlagblock 113 auf, an dem eine der Anschlageinheit 105 identische Anschlageinheit, die ebenfalls mit 105 bezeichnet ist, axial verschiebbbar angeordnet ist. Die Stoßköpfe 49 der Stoßdämpfer 37 und 43 schlagen zur Hubbegrenzung gegen die einander zugewandten Stirnseiten zweier an dem Zylinderkörper 3 angeordneter Stopperblöcke 115 und 117. Die Ausfahrbewegung der Schlittenplatte 11 wird durch Auflaufen des Stoßdämpfers 37 gegen den Stopperblock 115 begrenzt. Beim Rückfahren der Schlittenplatte 11 schlägt der Stoßdämpfer 43 gegen den Stopperblock 117, wodurch die Anschlageinheit 105 gegenüber dem Anschlagblock 113 zunächst axial verschoben wird. Schlägt der Anschlagblock 113 gegen den dem Stopperblock 117 zugewandten Anschlagkopf 33, so wird die Rückfahrbewegung der Schlittenplatte 11 über den Stoßdämpfer 43 begrenzt.

Auch bei dieser dritten Ausführungsform der Erfindung kann vorteilhafterweise sehr klein gebaut werden, ohne dass die Hubbegrenzungsmittel, insbesondere die Stoßdämpfer 37 und 43, über die Außenkonturen der Führungseinrichtung 111 hinausragen.

Bei den gezeigten Führungseinrichtungen 1, 101 und 111 kann weiterhin vorgesehen sein, dass die Anschlageinheiten 31 und 105 über nicht dargestellte Federelemente unter einer geringen Vorspannkraft gegen einen Anschlagkopf 33 bzw. gegen den Sicherungsring 36 beaufschlagt werden. Dies hat den Vorteil, dass beispielsweise aufgrund von Erschütterungen ein axiales, unerwünschtes Verschieben der Anschlageinheit 31, 105 während der Hubbewegung unterbleibt. Insbesondere bei der Ausführungsform gemäß Figur 14 wird hierdurch unterbunden, dass während der Hubbewegung der Schlittenplatte 11 die Anschlageinheit 105 unkontrolliert axial verschoben wird.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Führungseinrichtung (1, 101, 111) mit einem Zylinderkörper (3) und wenigstens einer darin angeordneten Zylinderkammer (5), mit einem in der Zylinderkammer (5) verschiebbar gelagerten, beidseitig beaufschlagbaren Kolben (7) mit einer Kolbenstange (9), mit einer mit dem freien Ende der Kolbenstange (9) gekoppelten, gegenüber dem Zylinderkörper (3) parallel zur Axialrichtung der Zylinderkammer (5) verfahrbaren Schlittenplatte (11) und mit an dem Zylinderkörper (3) und an der Schlittenplatte (11) angeordneten Hubbegrenzungsmitteln (21, 23, 25, 31, 32, 37, 45, 39, 43), **dadurch gekennzeichnet, dass** die Hubbegrenzungsmittel eine parallel zur Verfahrrichtung der Schlittenplatte (11), zwischen zwei Anschlägen (33, 36) axial verschiebbar gelagerte Anschlageinheit (31, 105) umfassen.

2. Führungseinrichtungng (1) nach Anspruch 1, **dadurch gekennzeichnet, dass** die Hubbegrenzungsmittel zylinderkörperseitig zwei Anschlagblöcke (23, 25) und schlittenplattenseitig einen zwischen den Anschlagblöcken (23, 25) angeordneten Stopperblock (21) umfassen, wobei an dem der dem freien Ende (10) der Kolbenstange (9) zugewandten Anschlagblock (23) die Anschlageinheit (31) axial verschiebbar angeordnet ist.

3. Führungseinrichtung (1) nach Anspruch 2 **dadurch gekennzeichnet, dass** zur Begrenzung der Ausfahrbewegung der Schlittenplatte (11) der Stopperblock (21) mit der Anschlageinheit (31) zusammenwirkt, die sich über den dem Stopperblock (21) zugewandten Anschlag (33) an dem dem freien Ende (10) der Kolbenstange (9) zugewandten Anschlagblock (23) abstützt.

4. Führungseinrichtung (1) nach Anspruch 1 oder 2, **dadurch gekennzeichnet, dass** die Schlittenplatte (11) auf der dem freien Ende (10) der Kolbenstange (9) zugewandten Seite einen Mitnehmer (15) aufweist, der vorzugsweise von einer an der Schlittenplatte (11) angeordneten Endplatte (15) gebildet ist, wobei beim Rückfahren der Schlittenplatte (11) der Mitnehmer (15) mit dem mit dem Mitnehmer (15) zugewandten freien Ende der Anschlageinheit (31) zusammenwirkt und die Anschlageinheit (31) in Rückfahrrichtung mitnimmt.

5. Führungseinrichtung nach Anspruch 2, 3 oder 4, **dadurch gekennzeichnet, dass** zur Begrenzung der Rückfahrbewegung der Schlittenplatte (11) der Stopperblock (21) mit dem der dem freien Ende (10) der Kolbenstange (9) abgewandten Anschlagblock (25) zusammenwirkt.

6. Führungseinrichtung (101) nach Anspruch 1, **dadurch gekennzeichnet, dass** die Hubbegrenzungsmittel schlittenplattenseitig zwei Stopperblöcke (107, 109) und zylinderkörperseitig einen zwischen den beiden Stopperblöcken (107, 109) angeordneten Anschlagblock (103) umfassen, wobei an dem Anschlagblock (103) die Anschlageinheit (105) axial verschiebbar angeordnet ist.

7. Führungseinrichtung (101) nach Anspruch 6, **dadurch gekennzeichnet, dass** die Hubbegrenzung der Schlittenplatte (11) in Ausfahrrichtung durch Zusammenwirken des dem freien Ende (10) der Kolbenstange (9) abgewandten Stopperblocks (109) mit dem einen freien Ende (43, 49) der Anschlageinheit (105) und in Rückfahrrichtung durch Zusammenwirken des anderen Stopperblocks (107) mit dem anderen freien Ende (37, 49) der Anschlageinheit (105) bewirkt wird.

8. Führungseinrichtung (101) nach Anspruch 6 oder 7, **dadurch gekennzeichnet, dass** die aneinder abgewandten Seiten der Stopperblöcke (107, 109) bündig mit den einander gegenüberliegenden Stirnseiten der Schlittenplatte (11) abschließen.

9. Führungseinrichtung (101) nach Anspruch 6, 7 oder 8, **dadurch gekennzeichnet, dass** der dem freien Ende (10) der Kolbenstange (9) zugewandte Stopperblock (107) von einer an der Schlittenplatte (11) angeordneten Endplatte (15) gebildet wird.

10. Führungseinrichtung (101) nach einem der Ansprüche 6-9, **dadurch gekennzeichnet, dass** zur Begrenzung der Ausfahrbewegung der Schlittenplatte (11) der dem freien Ende (10) der Kolbenstange (9) abgewandte Stopperblock (109) mit dem ihm zugewandten freien Ende (43, 49) der Anschlageinheit (105) zusammenwirkt, die sich über den diesem Stopperblock (109) zugewandten Anschlag (33) an der ebenfalls diesem Stopperblock (109) zugewandten Seite des Anschlagblocks (103) abstützt.

11. Führungseinrichtung (101) nach einem der vorhergehenden Ansprüche 6 - 10, **dadurch gekennzeichnet, dass** beim Rückfahren der Schlittenplatte (11) der dem freien Ende (10) der Kolbenstange (9) zugewandte Stopperblock (107) mit dem diesem Stopperblock (107) zugewandten freien Ende (37, 49) der Anschlageinheit (105) zusammenwirkt und die Anschlageinheit (105) in Rückfahrrichtung mitnimmt.

12. Führungseinrichtung (101) nach einem der vorhergehenden Ansprüche 6 - 11, **dadurch gekennzeichnet, dass** dass zur Begrenzung der Rückfahrbewegung der Schlittenplatte (11) der dem freien Ende (10) der Kolbenstange (9) zugewandte Stopperblock (107) mit dem freien Ende (37, 49) der Anschlageinheit (105) zusammenwirkt, die sich über den diesem Stopperblock (107) zugewandten Anschlag (33) an der ebenfalls diesem Stopperblock (107) zugewandten Seite des Anschlagblocks (103) abstützt.

13. Führungseinrichtung (111) nach Anspruch 1, **dadurch gekennzeichnet, dass** die Hubbegrenzungsmittel zylinderkörperseitig zwei Stopperblöcke (115, 117) und schlittenplattenseitig einen zwischen den Stopperblöcken (115, 117) angeordneten Anschlagblock (113) umfassen, wobei an dem Anschlagblock (113) die Anschlageinheit (105) axial verschiebbar angeordnet ist.

14. Führungseinrichtung (111), nach Anspruch 13, **dadurch gekennzeichnet, dass** die beiden Stopperblöcke (115, 117) bündig mit den einander gegenüberliegenden Stirnseiten der Schlittenplatte (11) abschließen.

15. Führungseinrichtung (111) nach Anspruch 13 oder 14, **dadurch gekennzeichnet, dass** zur Begrenzung der Ausfahrbewegung der Schlittenplatte (11) das dem freien Ende (10) der Kolbenstange (9) zugewandte freie Ende der Anschlageinheit (105) mit dem ihm zugewandten Stopperblock (115) zusammenwirkt, wobei sich die Anschlageinheit (105) über den diesem Stopperblock (115) zugewandten Anschlag (33) an der ebenfalls diesem Stopperblock (115) zugewandten Seite des Anschlagblock (113) abstützt.

16. Führungseinrichtung (111) nach einem der vorhergehenden Ansprüche 13 - 15, **dadurch gekennzeichnet, dass** beim Rückfahren der Schlittenplatte (11) das dem freien Ende (10) der Kolbenstange (9) abgewandte freie Ende (43, 49) der Anschlageinheit (105) mit dem ihm zugewandten Stopperblock (117) zusammenwirkt und die Anschlageinheit (105) axial verschoben wird.

17. Führungseinrichtung (111) nach einem der Ansprüche 13 bis 16, **dadurch gekennzeichnet, dass** zur Begrenzung der Rückfahrbewegung der Schlittenplatte (11) das dem freien Ende (10) der Kolbenstange (9) abgewandte freie Ende (43, 49) der Anschlageinheit (105) mit dem ihm zugewandten Stopperblock (117) zusammenwirkt, wobei sich die Anschlageinheit (105) über den diesem Stopperblock (117) zugewandten Anschlag (33) an der ebenfalls diesem Stopperblock (117) zugewandten Seite des Anschlagblocks (117) abstützt.

18. Führungseinrichtung (1, 101, 111) nach einem der vorhergehenden Ansprüche, **dadurch gekennzeichnet, dass** die Anschlageinheit (31, 105) in einem axialen Durchgangsloch (27) des entsprechenden Anschlagblocks (23, 103, 113) verschiebbar angeordnet ist.

19. Führungseinrichtung (1, 101, 111) nach Anspruch 18, **dadurch gekennzeichnet, dass** die Anschlageinheit (31, 105) eine Anschlaghülse (32) mit zwei an den einander abgewandten Enden der Anschlaghülse angeordneten Anschlägen (33, 36) umfasst, die zum Anschlagen gegen die einander gegenüberliegenden, das Durchgangsloch (27) aufweisenden Seiten des entsprechenden Anschlagblocks (23, 103, 113) geeignet sind.

20. Führungseinrichtung (1, 101, 111) nach einem der vorhergehenden Ansprüche, **dadurch gekennzeichnet, dass** die Anschlageinheit (31, 105) und/oder die Anschlagblöcke (25) wenigstens einen in axiale Richtung gegen einen Stopperblock (21, 107, 109, 115, 117) wirkenden Stoßdämpfer (37, 43) umfassen.

21. Führungseinrichtung (1, 101, 111) nach einem der vorhergehenden Ansprüche, **dadurch gekennzeichnet, dass** die axiale Position von an der Einstelleinheit (31, 105) angeordneten Anschlagmitteln (37, 39, 43, 45) über Einstellmittel (41, 47) verstellt und festgesetzt werden kann.

22. Führungseinrichtung (1, 101, 111) nach einem der vorhergehenden Ansprüche, **dadurch gekennzeichnet, dass** die Anschlageinheit (31, 105) unter Vorspannung gegen einen der Anschläge (33, 36) beaufschlagt ist.

23. Führungseinrichtung (1, 101, 111) insbesondere nach einem der vorhergehenden Ansprüche, mit einem Anfahranbausatz (51), der einen Grundkörper (53), wenigstens eine in dem Grundkörper (53) vorhandene Kolbenkammer (55), einen in der Kolbenkammer (55) parallel zu der Kolbenkammer (5) des Zylinderkörpers (3) verschiebbaren, beidseitig beaufschlagbaren Kolben (57) mit einer Kolbenstange (61) und eine an dem freien Ende der Kolbenstange (61) angeordnete Anschlagplatte (65) aufweist, wobei bei ausgefahrener Anschlagplatte (65) die Schlittenplatte (11) an eine definierte Position gegen die Anschlagplatte (65) angefahren wird und wobei die lichte Querschnittsfläche der Zylinderkammer (55) bzw. der Zylinderkammern des Grundkörpers (53) des Anbausatzes (51) größer ist als die lichte Querschnittsfläche der Zylinderkammer (5) bzw. der Zylinderkammern des Zylinderkörpers (3) der Führungseinrichtung (1, 101, 111).

24. Führungseinrichtung (1, 101, 111) nach Anspruch 23, **dadurch gekennzeichnet, dass** das Verhältnis der lichten Querschnittsfläche der Zylinderkammer (55) bzw. der Zylinderkammern des Grundkörpers (53) zu der lichten Querschnittsfläche der Zylinderkammer (5) bzw. der Zylinderkammern des Zylinderkörpers (3) im Bereich von 1,4 : 1 bis 2,4 : 1 und vorzugsweise im Bereich von 1,8 : 1 bis 2 : 1 liegt.

25. Anfahranbausatz (51) nach einem der Ansprüche 23 oder 24.
